# EUROPEAN PATENT SPECIFICATION

(11) **EP 1 714 920 B1**
(45) Date of publication and mention of the grant of the patent: **14.07.2010**
(21) Application number: 05103194.6
(22) Date of filing: 20.04.2005
(51) Int. Cl.: B65G 17/38, B65G 21/22

(54) **Chain conveyor**
Kettenförderer
Convoyeur à chaîne

(43) Date of publication of application: 25.10.2006
(73) Proprietor: Transmisiones Mecánicas AVE, S.A., 08940 Cornella de Llobregat, Barcelona (ES)
(72) Inventor: Vera Rodríguez, Francisco Javier, 08940 Cornellà de Llobregat (Barcelona) (ES)
(74) Representative: Grünecker, Kinkeldey, Stockmair & Schwanhäusser Anwaltssozietät

(56) References cited:
- EP-A- 1 148 003
- WO-A-2004/052759
- DE-A1- 10 027 229

## Description

### Technical field

The present invention relates to a chain conveyor comprising a track and a conveyor chain,
said track comprising at least one sliding surface that supports the chain and at least one portion curved in the plane of the sliding surface,
said chain having links comprising an upper carrying surface and a lower supporting surface which contacts said sliding surface, and a connecting system including at least two spaced eyes on one side of the link, at least one eye situated between said spaced eyes on the opposite side of the link and a hinge pin extending through said eyes,
the hinge pins and the hinge eyes being designed such that the chain is capable of flexing in the plane of transport defined by the carrying surfaces of the successive links,
said track comprising at least one recess and
the chain links comprising guide elements protruding downwards from the supporting surface into said recess, wherein the at least one recess of the track comprises two lateral surfaces extending downward from said sliding surface and parallel to one another and the guide elements are located adjacent to said two opposite lateral surfaces in the curved portion of the track.

In most cases the recess is formed by one or several grooves in said sliding surface.

### Background art

Such bent or curved chain conveyors are for example known from the documents EP 0 286 173 B2, EP 0 207 577 or DE 85 30 825 U1. They have chains capable of being curved in their main plane, i.e. of being flexed about an axis that runs perpendicular to the carrying surface of the chain links. The chain links comprise substantially rectangular carrying surfaces. These may be covered with an anti-skid pad of synthetic material with a thickness between 20% and 100% of the chain pitch, the latter being the space comprised between two successive axes.

The conveyor chain further comprises a connecting system which may be located between the carrying surface and the supporting surface. Said connecting system comprises at least two eyes placed on both sides of the link. Hinge pins are used for articulating adjacent links. The chains run on a track with at least one recess or groove. Guide elements on the lower surface of the chain links project into said groove.

According to all three of the above documents a substantial distance or play is kept between the guide elements and the lateral surfaces of the groove in the curved portion of the track. This distance or play avoids blocking of the chain in said curved portion. The chain links are firmly pressed against the sliding surface in the curved portion of the track by magnetic elements in order to avoid lifting or tilting of the chain links in said curved portions of the track.

A conveyor chain of this type may be used for transporting bottles, cans, boxes and similar containers.

In order to keep the links from being lifted off the track, the systems proposed thus far have either used hook-like projections underneath the support surface of the links which engage with guiding rails in the track or magnets located on the guide under the zone of the hinge in order to generate a magnetic field (as can be seen in European patent 0 286 173 B2). The magnetic field then attracts either the chain links or the hinge pins and provides a firm contact with the gliding surface of the track.

However, the hook-like projections tend to get jammed in the curved region and thus lead to excessive wear. Further, the track has to be disassembled in order to insert the chain links with the projecting portions of the hook-like projections into the track. It is not possible to simply take a chain link out of the track since the projecting portions of the chain link engages in a correspondingly formed recess in the track.

Said magnetic means for avoiding lateral lifting off of the conveyor chain on the track in a bend present various disadvantages. The decelerating and retaining effects exerted on the chain by this magnetic attraction, independently of the weight transported and the speed, substantially increase the wear of the elements used.

WO 2004/052759 A1 discloses a claim modular and a modular chain conveyor.

### Disclosure of the invention

The object of the present invention is to overcome the shortcomings of the conveyor chains of the prior art.

This object is attained by the features of the characterising portion of claim 1.

In other words, the recess or groove in the track has two opposite lateral surfaces that extend parallel to the centre line of the track. These lateral surfaces are almost contacted by the guide elements underneath the supporting surface, i.e. the guide elements extend with little play adjacent to the opposite lateral surfaces. The play between the guide elements and the lateral surfaces may be for example 0.1 mm in order to avoid blocking or jamming of the guide elements. One single guide element may be arranged closely adjacent to the two opposite lateral surfaces of one groove. Alternatively, two guide elements may be provided inside one groove and each guide element extends adjacent to one of the two lateral surfaces of one groove. In another alternative embodiment, there may be a plurality of grooves and a plurality of guide elements, each guide element protruding into one groove. Each guide element may extend closely adjacent to at least one lateral surface of the respective groove, such that at least two opposite lateral surfaces co-operate with little play with the guide elements. The term "opposite lateral surfaces" designates two surfaces with normals pointing in opposite directions. According to the invention, it is proposed to keep the guide elements closely adjacent to the lateral surfaces of the groove on two opposite sides with very little play (e.g. 0.1 mm). The zones where the guide elements approach the lateral surfaces are at a vertical distance from the supporting surface so that tilting of the chain links results in a physical contact between the guide elements and the two opposite lateral surfaces. This contact prevents further tilting. Lifting of the outer edge of the chain in a curved portion of the track is thus prevented without any additional magnetic force acting on the chain links.

Since the two opposite lateral surfaces of the guide elements extend downwards from said sliding surface and parallel to one another, the guide elements of the chain links may simply be inserted by a linear movement in a direction parallel to the planes of the lateral surfaces. The lateral surfaces of the grooves or recesses may extend perpendicularly to the sliding surface so that the chain links can be lowered in a vertical direction onto the sliding surface while introducing the guide elements into the grooves.

Preferably, the guide elements also comprise parallel lateral surfaces which extend perpendicularly to the supporting surface. Thus, straight vertical guide elements can be easily inserted into straight vertical grooves of the track. During operation the straight guide elements project into straight grooves and extend closely adjacent to the lateral walls of said grooves in the curved portion of the track. This avoids tilting of the chain link about the horizontal centre line of the chain.

In one basic embodiment, each chain link can be provided in its centre with one straight and round guide pin as a guide element and the track can be provided with one groove for said guide pins. The width of the groove corresponds to the diameter of the guide pins so that they are guided in the groove with little play.

In another embodiment, two guide elements are located underneath the supporting surface. These two guide elements run in two separate grooves in the track. They can either contact the two inner lateral surfaces of the two grooves or the two outer lateral surfaces of the two grooves or both. The shape of the guide elements and/or the distance between the lateral guide surfaces of the groove have to be adapted so that there is almost physical contact between the guide elements and the lateral surfaces of the groove without any jamming in the curved region of the track.

The horizontal projection of the lateral surface of the guide elements may be arched with respect to the lateral surface of the groove. The curvature of the lateral surface of the guide element can correspond to the curvature of the corresponding surface of the groove in the curved region of the track. A convex outer surface of the guide element provides an enlarged contact area with the lateral surface of the groove and thus reduces friction and abrasion in case of contact between the guide element and the lateral surface of the groove due to lifting forces in the curved portion of the track.

As an alternative to shaping the lateral surfaces of the guide elements, the distance between the two lateral guide surfaces of the groove or grooves in the track can be chosen such that the guide elements do not block or jam in the curved region of the track. If the two opposite lateral surfaces of the groove are located between the guide elements, the distance between the two opposite lateral surfaces in said curved portion should be slightly smaller than in a straight portion of the track. If, however, the guide elements are located between said two opposite lateral surfaces, the distance between the two opposite lateral surfaces in said curved portion can be slightly larger than in a straight portion of the track.

If two guide elements contact the lateral surfaces of two grooves on both sides with little play, then the shape of the groove may be adjusted in the curved region of the track in order to avoid jamming. Depending on the shape of the two guide elements and the distance between these guide elements, the width of the two grooves and the distance between their centre line can be adjusted so that the guide elements stay in close contact with the respective walls of the grooves maintaining a small play for good guidance and avoiding jamming throughout the curved region of the track.

The guide elements as well as the lateral surfaces of the groove preferably extend downwards from and perpendicularly to the sliding surface of the track or the supporting surface of the link.

Preferably, a conveyor chain of the type explained in the introductory paragraph and described in EP 0 286 173 B2 is provided which, according to the invention, is characterised by the fact that the links employ a straight guiding system which prevents lateral lifting of the chain and at the same time reduces costs and facilitates its installation, maintenance and replacement. The straight guide elements can easily be inserted into and removed from the grooves in the track.

The hinge pins may be made of nonmagnetic stainless steel, magnetic steel and even synthetic material. At least two eyes on one end of the link and one eye in the intermediate space between the two lateral eyes are provided. The hinge pin is preferably embraced by at least three spaced apart eyes connected with one of the links and by at least two eyes in the intermediate space between the spaced apart eyes. At least one guide projecting downwards from the underside of the chain link laterally guides the chain with respect to the tracks by running inside the groove of said chain conveyor. The hinge pin is preferably located between the carrying surface and the supporting surface, i.e. within the thickness of the chain link. It preferably extends at least over 50% and most preferably over 100% of the width of the chain link.

Advantageously, the upper face of the carrying surface is covered with a material with anti-skid properties so as to avoid the transported product sliding off the conveyor chain. Alternatively, the surface where the transported product actually comes into contact with the chain may consist of rollers so as to reduce friction and absorb stress.

Note that it is not necessary that each chain link has the guide elements. The chain may comprise one or more links without guide elements. These links are guided and kept in contact with the track due to the guide elements of the adjacent chain links.

The invention further refers to a bent or straight segment for a chain conveyor, comprising at least one guiding track and at least one conveyor chain, wherein the guiding track has at least one sliding surface and a guiding groove which preferably receives only the guide element of the chain. The hinge pin of the latter remains preferably located above the carrying surface of the bent or straight segment.

### Brief description of the drawings

The manner of execution of the invention as well as the advantages resulting therefrom will be more clearly understood with the help of the following description of preferred embodiments of the invention with reference to the accompanying drawings.

Fig. 1 is a perspective top view of the carrying surface of a chain link according to a first embodiment of the invention.

Fig. 2 is a perspective bottom view of the supporting surface of the chain link of Fig. 1.

Fig. 3 is a front view of the chain link of Fig. 1.

Fig. 4 is a plan view of the carrying surfaces of several chain links of Fig. 1 joined together.

Fig. 5 is a front view of the chain link of Fig. 1 before insertion of its guide elements into the groove of the track.

Fig. 6 is a front view of the chain link of Fig. 5 with the inserted guide elements.

Fig. 7 is a front view of a second embodiment of a chain link.

Fig. 8 is a plan view corresponding to Fig. 4 of the second embodiment.

Fig. 9 is a front view of the second embodiment with the guide element inserted in the groove of the track.

Figs. 10 and 11 shows the chain link of Figs. 1-6 with an alternative carrying surface.

Figs. 12 and 13 shows the chain link of Figs. 1-6 with a further embodiment of the carrying surface.

### Mode(s) for carrying out the invention

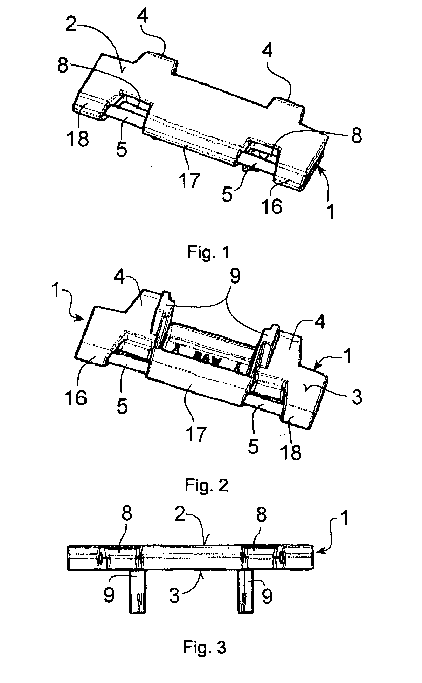

Referring first to Figs. 1-6, a first embodiment of the invention is illustrated. Fig. 1 shows a chain link 1 made of synthetic material and comprising a substantially rectangular carrying surface 2 and two spaced apart eyes 4 on one edge of said carrying surface 2. The opposite edge of the link 1 comprises three eyes 16-18 with two recesses 8 between said eyes 16-18. The two eyes 4 on one chain link 1 are inserted into the recesses 8 of the adjacent chain link 1 so that the eyes 4 are located between said eyes 16, 17 and 17, 18. A hinge pin 5 is inserted through the bores of the eyes 16-18. The hinge pin 5 connects two adjacent chain links 1 pivotally about the axis of the hinge pin 5. The hinge pin 5 extends almost over the entire width of the chain links 1. The eyes 4, 16-18 for the hinge pin 5 and the pin 5 itself are located within the thickness of the chain link 1 and do not protrude above the carrying surface 2 or below the supporting surface 3 of the link 1.

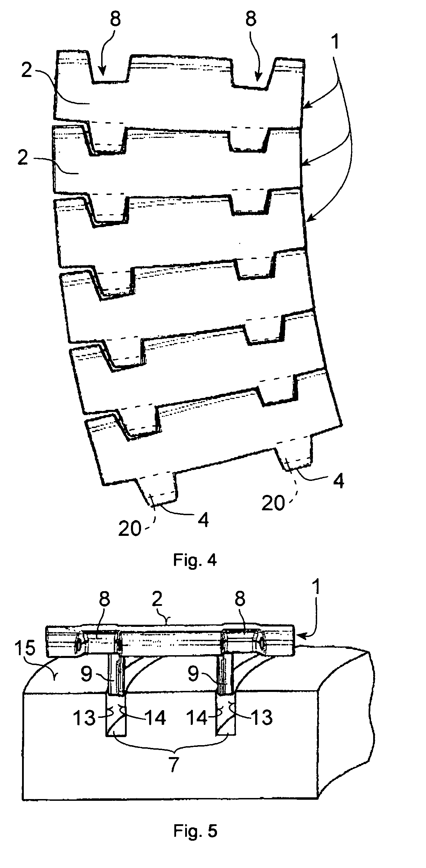

Further, as can be seen in Fig. 4, the hinge pins 5 and the hinge eyes or bores are designed such that the chain is capable of being flexed in the plane of transport. The plane of transport is defined by the carrying surfaces 2 of the successive links 1. The projecting eyes 4 are smaller than the recesses 8 so that are capable of slightly tilting inside the recesses 8. The projecting eyes 4 comprise elongated bores 20 which are represented in dashed lines in Fig. 4. The elongated bores 20 extend through the major part of the length of the projecting eyes 4. The hinge pins 5 can slide inside the elongated bores 20 when the chain link 1 is rotated with respect to the adjacent chain link 1 in the horizontal plane of transport.

Fig. 2 shows the chain link 1 of Fig. 1 as seen from below, whereby the supporting surface 3 and the location of the eyes 4 and of the hinge pins 5 with respect to the same may be appreciated. Fig. 2 further shows two projecting guide elements 9 which protrude from the supporting surface 3.

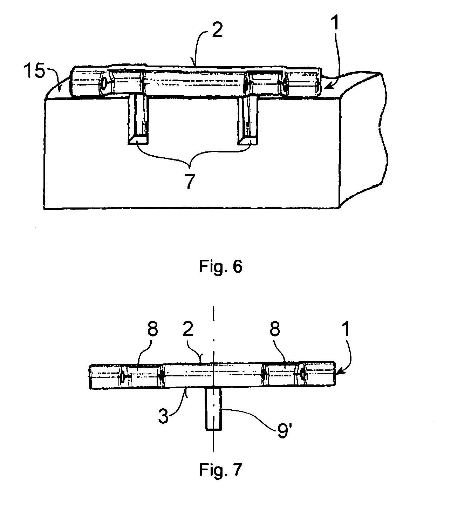

As shown in Fig. 3, said two guide elements 9 are straight projections protruding downwards from the supporting surface 3. The guide elements 9 extend perpendicularly with respect to the supporting surface 3 and they are located in the end-regions of the central eye 17 of the hinge link 1. Said projections or guide elements 9 serve to laterally guide the chain by engaging in the guiding recesses or grooves 7 of the track 6 (see Figs. 5 and 6). The two parallel guiding grooves 7 have a substantially rectangular shape and extend perpendicularly to the sliding surface 15 of the track 6. Note that it is also possible to provide guiding recesses with different shape. The guiding recesses may be open at the outside if the sliding surface is comprised between two guiding recesses.

Fig. 5 shows that the guide elements 9 of the chain link 1 may easily be inserted into the grooves 7 of the track. The supporting surface 3 of the chain link 1 rests on a sliding surface 15 of the track and the guide elements 9 extend inside the grooves 7 of the track with little play with respect to the straight lateral surfaces 13, 14 of the two grooves 7.

Due to the contact of the guide elements 9 with the lateral surfaces 13, 14 of the grooves 7 in the curved region of the track, the guide elements 9 prevent the chain links 1 from tilting and keep the outer edge of the links 1 on the sliding surface 15 of the track. The straight guide elements 9 within the straight grooves 7 ensure that the orientation of the chain link 1 remains parallel to the sliding surface 15 of the track.

Good results are obtained if the guide elements 9 are guided by the lateral surfaces 13, 14 of the grooves 7 on both sides. However, it is sufficient if only two opposite surfaces 13, 14 of the grooves 7, i.e. the two outer surfaces 13 or the inner surfaces 14, contact the guide element 9 with little play.

The shape of the guide elements 9 and the shape of the grooves 7 have to be such that the guide elements 9 remain inside the grooves 7 with little play with respect to the lateral surfaces 13, 14 of the grooves. The grooves 7 may be somewhat larger in the curved region of the track than the width of the guide elements 9. This accounts for the rotation of the guide elements 9 inside the grooves 7 as the chain is bent and the links 1 are rotated horizontally. In order to stabilise the chain links 1 on the sliding surface 15 of the track it is only necessary to maintain a punctual or linear contact zone between the guide elements 9 and two opposite lateral surfaces of the grooves 7. In the present description, by "lateral" is meant lateral with respect to the central line of the chain in the direction of transportation. The term "opposite" is directed to surfaces with parallel normals that point in opposite directions.

Alternatively, the guide elements may have a shape which ensures that their extension inside the two grooves 7 remains the same in the curved region of the track as compared to the straight region of the track. The distances of the two grooves 7 in the curved region, however, may be smaller than in the straight region.

It is also possible to provide a different number of grooves on the track, e.g. one groove or three grooves. As long as two opposite lateral surfaces, i.e. surfaces which extend generally in the direction of transportation, are contacted by the guide elements at a certain distance underneath the sliding surface 15, the chain link 1 will be prevented from tilting.

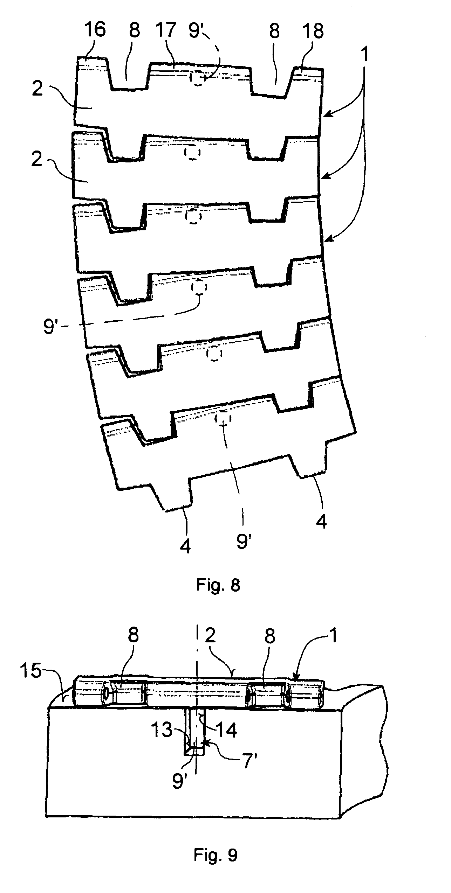

Figs. 7 to 9 show a second embodiment of the present invention. The chain links 1 correspond to those of Figs. 1-6 and identical elements are identified by identical reference numbers. According to this second embodiment, only one round guide element 9' is provided in the middle of each chain link 1. The guide element 9' has the form of a round pin protruding from the supporting surface 3 of the chain links 1'. The track has only one central groove 7' in the middle of the sliding surface 15. The width of this central groove 7' is less than 1 mm larger than the diameter of the round guide element 9' so that the guide element 9' is guided between both lateral surfaces of this groove 7' with little play.

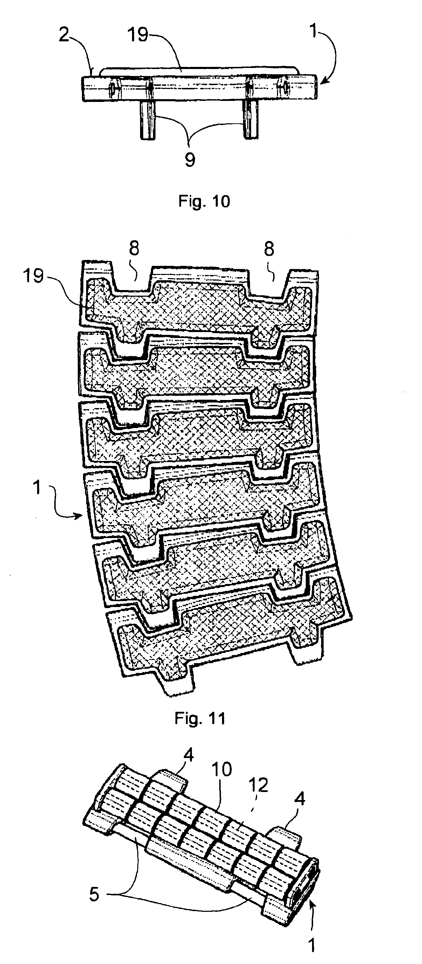

Figs. 10 and 11 show another embodiment of the chain 1 of Figs. 1-6. In this embodiment, the carrying surface 2 is essentially covered with a rubber strip that forms a pad 19. The pad 19 may be fastened to the chain link by chemical bonding (e.g. glue) or by mechanical means (e.g. screws). Rubber, by virtue of its anti-skid properties, prevents the transported product sliding off the conveyor chain, which is especially important in the bent sections of the track 6. It is obvious that rubber may be replaced by any other material with anti-skid properties without leaving the scope of the invention.

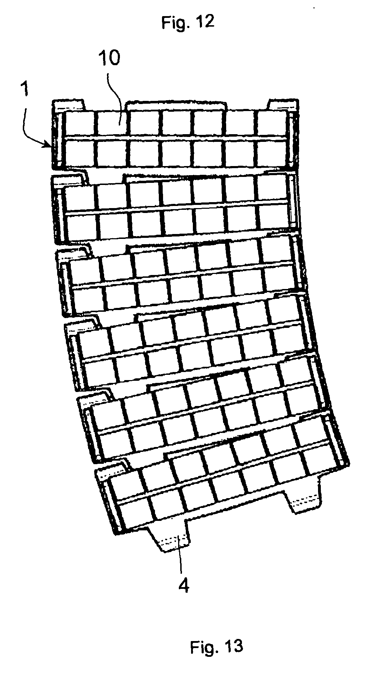

Figs. 12 and 13 show a further embodiment of the chain of Figs. 1- 6. In this embodiment, the carrying surface 2 of the chain links 1 is provided with a support member 11 protruding upwards in a substantially perpendicular direction on each of its lateral edges. One or more axes 12 (two in the example illustrated in the figures) pass through said support member 11, extending in directions substantially parallel to the carrying surface 2. The axes 12 carry cylindrical rollers 10. These rollers 10 constitute the actual contact surface for products transported by the conveyor chain in this embodiment. As they can freely rotate about the axes 12, the rollers 10 reduce friction caused by the transported product and help absorb excessive stress exerted on the chain, thereby reducing its wear.

Obviously, a person skilled in the art may come up with certain variants of the embodiments described herein without leaving the scope of the invention as set out in the claims.

Reference numbers:
- 1: chain link
- 2: carrying surface
- 3: supporting surface
- 4: eye
- 5: hinge pin
- 6: track
- 7,7': recess, groove
- 8: recess
- 9,9': guide element
- 10: roller
- 11: support member
- 12: axis
- 13: lateral surface
- 14: lateral surface
- 15: sliding surface
- 16: outer eye
- 17: central eye
- 18: outer eye
- 19: pad
- 20: elongated bore

## Claims

1. A chain conveyor comprising a track and a conveyor chain,
said track comprising at least one sliding surface (15) that supports the chain and at least one portion curved in the plane of the sliding surface (15),
said chain having links (1) comprising an upper carrying surface (2) and a lower supporting surface (3) which contacts said sliding surface (15), and a connecting system including at least two spaced eyes (4) on one side of the link (1), at least one eye (17) situated between said spaced eyes (4) on the opposite side of the link (1) and a hinge pin (5) extending through said eyes (4,17),
the hinge pins (5) and the hinge eyes (4,16-18) being designed such that the chain is capable of flexing in the plane of transport defined by the carrying surfaces (2) of the successive links (1),
said track comprising at least one recess (7,7') and
said chain links (1) comprising guide elements (9,9') protruding downwards from the supporting surface (3) into said recess (7,7'),
wherein the at least one recess (7,7') of the track comprises two opposite lateral surfaces (13,14) extending downwards from said sliding surface (15) and parallel to one another and the guide elements (9,9') are located adjacent to said two opposite lateral surfaces (13,14) in the curved portion of the track, **characterized in that** the guide elements (9,9') are located adjacent to said two opposite lateral surfaces (13,14) in the curved portion of the track with little play, and that the zones where the guide elements (9,9') approach the lateral surfaces (13,14) are at a vertical distance from the supporting surface (3) so that the tilting of the chain links results in a physical contact between the guide elements (9,9') and the two opposite lateral surfaces (13,14), which contact prevents further tilting.

2. A chain conveyor according to claim 1, **characterized in that** the guide elements (9,9') comprise lateral surfaces extending downwards from said supporting surface (3) and parallel to one another.

3. A chain conveyor according to claim 1 or 2, **characterized in that** the lateral surfaces (13,14) of the recesses (7,7') extend perpendicularly to said sliding surface (15).

4. A chain conveyor according to any one of the preceding claims, **characterized in that** the horizontal projection of the lateral surface of the guide elements (9') is arched with respect to the lateral surface (13,14) of the recess (7') towards the centre of the track.

5. A chain conveyor according to any one of the preceding claims, **characterized in that** the two opposite lateral surfaces (14) are located between the guide elements (9) and the distance between the two opposite lateral surfaces (14) in said curved portion is slightly smaller than in a straight portion of the track.

6. A chain conveyor according to any one of the preceding claims, **characterized in that** the guide elements (9) are located, between said two opposite lateral surfaces (14) and the distance between the two opposite lateral surfaces (14) in said curved portion is slightly larger than in a straight portion of the track.

7. A chain conveyor according to any one of the preceding claims, **characterized in that** the carrying surfaces (2) comprise at least one of the following features:
they are substantially rectangular shape,
they are made of synthetic material or rubber,
their thickness equals between 20% and 100% of the pitch of the chain,- they are composed of a pad (19) bonded to the upper surface of the chain link (1),- they are provided with rolling elements (10) for the reduction of frictional forces.

8. A chain conveyor according to any one of the preceding claims, **characterized in that** the connecting system comprises at least one of the following features:
it is located between the carrying surface (2) and the supporting surface (3),
it extends at least over 50% of the width of the chain link (1),
its hinge pins (5) are made of nonmagnetic stainless steel,
its hinge pins (5) are made of magnetic steel,
its hinge pins (5) are made of synthetic material.

9. A chain conveyor according to any one of the preceding claims, **characterized in that** the track comprises at least one of the following features:
at least one groove (7,7') which forms the recess of the track;
the lateral surfaces (13,14) of the at least one recess (7,7') extend downwards from and perpendicularly to the sliding surface (15);
two parallel grooves (7) for receiving one guide element (9) each.

10. A chain conveyor according to any one of the preceding claims, **characterized in that** at least one chain link without a guide element is arranged between two chain links (1) having guide elements (9,9').

## Patentansprüche

1. Kettenfördervorrichtung, die eine Bahn und eine Förderkette umfasst,
wobei die Bahn wenigstens eine Gleitfläche (15), die die Kette trägt, und wenigstens einen Abschnitt umfasst, der in der Ebene der Gleitfläche (15) gekrümmt ist,
die Kette Glieder (1), die eine obere Förderfläche (2) und eine untere Tragefläche (3) umfassen, die mit der Gleitfläche (15) in Kontakt ist, sowie ein Verbindungssystem aufweist, das wenigstens zwei beabstandete Ösen (4) an einer Seite des Gliedes (1), wenigstens eine Öse (17), die sich zwischen den beabstandeten Ösen (4) an der gegenüberliegenden Seite des Gliedes (1) befindet, und einen Gelenkbolzen (5) enthält, der sich durch die Ösen (4, 17) hindurch erstreckt,
die Gelenkbolzen (5) und die Gelenkösen (4, 16, 18) so ausgeführt sind, dass sich die Kette in der Transportebene biegen kann, die durch die Förderflächen (2) der aufeinanderfolgenden Glieder (1) gebildet wird,
die Bahn wenigstens eine Vertiefung (7, 7') umfasst, und
die Kettenglieder (1) Führungselemente (9, 9') umfassen, die von der Tragefläche (3) nach unten in die Vertiefung (7, 7') hinein vorstehen,
wobei die wenigstens eine Vertiefung (7, 7') der Bahn zwei einander gegenüberliegende seitliche Flächen (13, 14) umfasst, die sich von der Gleitfläche (15) nach unten und parallel zueinander erstrecken, und die Führungselemente (9, 9') in dem gekrümmten Abschnitt der Bahn an die zwei einander gegenüberliegenden seitlichen Flächen (13, 14) angrenzend angeordnet sind, **dadurch gekennzeichnet, dass** die Führungselemente (9, 9') in dem gekrümmten Abschnitt der Bahn an die zwei einander gegenüberliegenden seitlichen Flächen mit geringem Spiel angrenzend angeordnet sind und dass die Zonen, in denen sich die Führungselemente (9, 9') den seitlichen Flächen (13, 14) nähern, in einem vertikalen Abstand zu der Tragefläche (3) liegen, so dass das Neigen der Kettenglieder physischen Kontakt zwischen den Führungselementen (9, 9') und den zwei einander gegenüberliegenden seitlichen Flächen bewirkt und der Kontakt weiteres Neigen verhindert.

2. Kettenfördervorrichtung nach Anspruch 1, **dadurch gekennzeichnet, dass** die Führungselemente (9, 9') seitliche Flächen umfassen, die sich von der Tragefläche (3) nach unten und parallel zueinander erstrecken.

3. Kettenfördervorrichtung nach Anspruch 1 oder 2, **dadurch gekennzeichnet, dass** sich die seitlichen Flächen (13, 14) der Vertiefungen (7, 7') senkrecht zu der Gleitfläche (15) erstrecken.

4. Kettenfördervorrichtung nach einem der vorangehenden Ansprüche, **dadurch gekennzeichnet, dass** der horizontale Vorsprung der seitlichen Fläche der Führungselemente (9') in Bezug auf die seitliche Fläche (13, 14) der Vertiefung (7') zur Mitte der Bahn hin gebogen ist.

5. Kettenfördervorrichtung nach einem der vorangehenden Ansprüche, **dadurch gekennzeichnet, dass** sich die zwei einander gegenüberliegenden seitlichen Flächen (14) zwischen den Führungselementen (9) befinden und der Abstand zwischen den zwei einander gegenüberliegenden seitlichen Flächen (14) in dem gekrümmten Abschnitt geringfügig kleiner ist als in einem geraden Abschnitt der Bahn.

6. Kettenfördervorrichtung nach einem der vorangehenden Ansprüche, **dadurch gekennzeichnet, dass** sich die Führungselemente (9) zwischen den zwei einander gegenüberliegenden seitlichen Flächen (14) befinden und der Abstand zwischen den zwei einander gegenüberliegenden seitlichen Flächen (14) in dem gekrümmten Abschnitt geringfügig größer ist als in einem geraden Abschnitt der Bahn.

7. Kettenfördervorrichtung nach einem der vorangehenden Ansprüche, **dadurch gekennzeichnet, dass** die Förderflächen (2) wenigstens eines der folgenden Merkmale umfassen:
sie sind im Wesentlichen rechteckig geformt,
sie bestehen aus synthetischem Material oder Gummi,
ihre Dicke entspricht zwischen 20 % und 100 % der Teilung der Kette, sie bestehen aus einer Auflage (19), die an die Oberseite des Kettengliedes (1) geklebt ist, und sie sind mit Wälzelementen (10) zur Verringerung von Reibungskräften versehen.

8. Kettenfördervorrichtung nach einem der vorangehenden Ansprüche, **dadurch gekennzeichnet, dass** das Verbindungssystem wenigstens eines der folgenden Merkmale umfasst:
es befindet sich zwischen der Förderfläche (2) und der Tragefläche (3),
es erstreckt sich über wenigstens 50 % der Breite des Kettengliedes (1),
seine Gelenkbolzen (5) bestehen aus nichtmagnetischem rostfreiem Stahl,
seine Gelenkbolzen (5) bestehen aus magnetischem Stahl,
seine Gelenkbolzen (5) bestehen aus synthetischem Material.

9. Kettenfördervorrichtung nach einem der vorangehenden Ansprüche, **dadurch gekennzeichnet, dass** die Bahn wenigstens eines der folgenden Merkmale umfasst:
wenigstens eine Nut (7, 7') bildet die Vertiefung der Bahn;
die seitlichen Flächen (13, 14) der wenigstens einen Vertiefung (7, 7') erstrecken sich von der Gleitfläche (15) und senkrecht zu ihr nach unten;
zwei parallele Nuten (7) nehmen jeweils ein Führungselement (9) auf.

10. Kettenfördervorrichtung nach einem der vorangehenden Ansprüche, **dadurch gekennzeichnet, dass** wenigstens ein Kettenglied ohne ein Führungselement zwischen zwei Kettengliedern (1) mit Führungselementen (9, 9') angeordnet ist.

## Revendications

1. Convoyeur à chaîne comprenant une chenille et une chaîne de convoyeur,
ladite chenille comprenant au moins une surface de glissement (15) qui supporte la chaîne et au moins une partie incurvée dans le plan de la surface de glissement (15),
ladite chaîne ayant des maillons (1) comprenant une surface de transport supérieure (2) et une surface de support inférieure (3) qui entre en contact avec ladite surface de glissement (15), et un système de connexion incluant au moins deux oeillets espacés (4) sur un côté du maillon (1), au moins un oeillet (17) étant situé entre lesdits oeillets espacés (4) sur le côté opposé du maillon (1) et un goujon d'articulation (5) s'étendant à travers lesdits oeillets (4, 17),
les goujons d'articulation (5) et les oeillets d'articulation (4, 16 à 18) étant conçus de sorte que la chaîne est susceptible de fléchir dans le plan de transport défini par les surfaces de transport (2) des maillons successifs (1),
ladite chenille comprenant au moins une partie en retrait (7, 7') et
lesdits maillons de chaîne (1) comprenant des éléments de guidage (9, 9') dépassant vers le bas à partir de la surface de support (3) dans ladite partie en retrait (7, 7'),
dans lequel la partie en retrait (7, 7') de la chenille comprend deux surfaces latérales opposées (13, 14) s'étendant vers le bas à partir de ladite surface de glissement (15) et parallèles l'une à l'autre et les éléments de guidage (9, 9') sont situés adjacents auxdites deux surfaces latérales opposées (13, 14) dans la partie incurvée de la chenille, **caractérisé en ce que** les éléments de guidage (9, 9') sont situés adjacents auxdites deux surfaces latérales opposées (13, 14) dans la partie incurvée de la chenille avec un peu de jeu, et **en ce que** les zones où les éléments de guidage (9, 9') approchent des surfaces latérales (13, 14) sont à une certaine distance verticale de la surface de support (3) de sorte que l'inclinaison des maillons de chaîne aboutit à un contact physique entre les éléments de guidage (9, 9') et les deux surfaces latérales opposées (13, 14), lequel contact empêche une inclinaison supplémentaire.

2. Convoyeur à chaîne selon la revendication 1, **caractérisé en ce que** les éléments de guidage (9, 9') comprennent des surfaces latérales s'étendant vers le bas à partir de ladite surface de support (3) et parallèles l'une à l'autre.

3. Convoyeur à chaîne selon la revendication 1 ou 2, **caractérisé en ce que** les surfaces latérales (13, 14) des parties en retrait (7, 7') s'étendent perpendiculairement à ladite surface de glissement (15).

4. Convoyeur à chaîne selon l'une quelconque des revendications précédentes, **caractérisé en ce que** la partie en saillie horizontale de la surface latérale des éléments de guidage (9') est arquée par rapport à la surface latérale (13, 14) de la partie en retrait (7') vers le centre de la chenille.

5. Convoyeur à chaîne selon l'une quelconque des revendications précédentes, **caractérisé en ce que** les deux surfaces latérales opposées (14) sont situées entre les éléments de guidage (9) et la distance entre les deux surfaces latérales opposées (14) dans ladite partie incurvée est légèrement plus petite que dans une partie droite de la chenille.

6. Convoyeur à chaîne selon l'une quelconque des revendications précédentes, **caractérisé en ce que** les éléments de guidage (9) sont situés entre lesdites deux surfaces latérales opposées (14) et la distance entre les deux surfaces latérales opposées (14) dans ladite partie incurvée est légèrement plus grande que dans une partie droite de la chenille.

7. Convoyeur à chaîne selon l'une quelconque des revendications précédentes, **caractérisé en ce que** les surfaces de transport (2) comprennent au moins l'une des particularités suivantes :
- elles sont de forme sensiblement rectangulaire,
- elles sont faites de matière synthétique ou de caoutchouc,
- leur épaisseur est comprise entre 20 % et 100 % du pas de la chaîne,
- elles sont composées d'un coussinet (19) collé à la surface supérieure du maillon de chaîne (1), - elles sont munies d'éléments de roulement (10) pour la réduction de forces de friction.

8. Convoyeur à chaîne selon l'une quelconque des revendications précédentes, **caractérisé en ce que** le système de connexion comprend au moins l'une des particularités suivantes :
- il est situé entre la surface de transport (2) et la surface de support (3),
- il s'étend sur au moins plus de 50 % de la largeur du maillon de chaîne (1),
- ses goujons d'articulation (5) sont faits d'acier inoxydable non magnétique,
- ses goujons d'articulation (5) sont faits d'acier magnétique,
- ses goujons d'articulation (5) sont faits de matière synthétique.

9. Convoyeur à chaîne selon l'une quelconque des revendications précédentes, **caractérisé en ce que** la chenille comprend au moins l'une des particularités suivantes :
- au moins une rainure (7, 7') qui forme la partie en retrait de la chenille ;
- les surfaces latérales (13, 14) d'au moins une partie en retrait (7, 7') s'étendent vers le bas et perpendiculairement à la surface de glissement (15) ;
- deux rainures parallèles (7) pour recevoir un élément de guidage (9) chacune.

10. Convoyeur à chaîne selon l'une quelconque des revendications précédentes, **caractérisé en ce qu'**au moins un maillon de chaîne sans élément de guidage est agencé entre deux maillons de chaîne (1) ayant des éléments de guidage (9, 9').
